Europäisches Patentamt

European Patent Office

Office européen des brevets

(19)

(11) Numéro de publication : **0 477 095 A1**

# (12) DEMANDE DE BREVET EUROPEEN

(21) Numéro de dépôt : **91402482.3**

(22) Date de dépôt : **18.09.91**

(51) Int. Cl.⁵ : **B62D 43/04,** B62D 43/00, B62D 43/10

(30) Priorité : **18.09.90 FR 9011485**

(43) Date de publication de la demande : **25.03.92 Bulletin 92/13**

(84) Etats contractants désignés : **BE DE ES FR GB IT LU SE**

(71) Demandeur : **GARAGE ISSELE S.A. 142 Grande Rue F-54180 Heillecourt (FR)**

(72) Inventeur : **Issele, Jean Pierre 142 Grande Rue F-54180 Heillecourt (FR)**

(74) Mandataire : **CABINET BONNET-THIRION 95 Boulevard Beaumarchais F-75003 Paris (FR)**

(54) **Dispositif de rangement pour roue de secours.**

(57)   Il s'agit d'un dispositif de rangement du genre comportant un réceptacle (11), propre au logement d'une roue de secours (12), et un support (13), qui, destiné à équiper un quelconque véhicule, est apte à porter le réceptacle (11) et à faire passer celui-ci de l'une à l'autre de deux positions, l'une, escamotée, de route, l'autre, déployée, facilitant l'accès à la roue de secours (12).

   Suivant l'invention, le réceptacle est un bac, et, par exemple, le support (13) comporte deux longrines télescopiques (24), sur lesquelles le réceptacle (11) est apte à être posé, deux pieds-droits (25), qui, solidaires du véhicule concerné, portent chacun respectivement les longrines (24) et sont aptes à les faire passer d'une position haute à une position basse, et des moyens de commande (26), qui, à la disposition de l'usager, sont propres au contrôle de ces pieds-droits (25).

   Application aux véhicules, notamment aux véhicules automobiles.

EP 0 477 095 A1

Jouve, 18, rue Saint-Denis, 75001 PARIS

FIG.2

La présente invention concerne d'une manière générale les véhicules, notamment les automobiles, et elle vise plus particulièrement le dispositif de rangement qu'il est usuel d'y prévoir pour le logement d'une roue de secours.

Le plus souvent à ce jour, ce dispositif de rangement intervient sous le coffre à bagages, et le réceptacle qu'il comporte pour le logement de la roue de secours est directement articulé à la tôle de fond de ce coffre ou à une suspente attelée à celle-ci, en se réduisant, en pratique, à un simple berceau largement ajouré réalisé, par exemple, en fer rond ou en feuillard convenablement conformé et entretoisé.

Un dispositif de rangement ainsi réalisé présente de nombreux inconvénients.

Tout d'abord, la roue de secours y est largement soumise aux projections intervenant inévitablement au roulement.

De ce fait, elle se trouve très rapidement largement souillée, ce qui en rend particulièrement désagréable la manipulation ultérieure.

En outre, l'accès à cette roue de secours est malaisé, cet accès imposant en pratique d'avoir au moins en partie à intervenir en dessous du véhicule.

Pour faciliter cet accès, il a été déjà proposé, sous des modalités très diverses, notamment dans les brevets américains Nos 3.435.971, 4.095.709, 4.278.191, 4.676.415 et 4.573.855, de faire porter le réceptacle par un support apte à le faire passer de l'une à l'autre de deux positions, l'une escamotée, de route, l'autre, déployée, d'accès.

Mais, les dispositions correspondantes, relativement complexes, ne sauraient convenir à l'équipement de tous les véhicules, notamment lorsqu'il s'agit de véhicules préexistants.

En outre, dans tous les cas, le réceptacle reste, comme précédemment, un simple berceau largement ajouré, avec les inconvénients déjà précisés.

La présente invention a d'une manière générale une disposition permettant d'éviter ces inconvénients et conduisant en outre à d'autres avantages.

De manière plus précise, elle a pour objet un dispositif de rangement pour roue de secours, du genre comportant un réceptacle, propre au logement d'une roue de secours, et un support, qui, destiné à équiper un véhicule, est apte à porter ledit réceptacle et à faire passer celui-ci de l'une à l'autre de deux positions, l'une de route, l'autre d'accès, ce dispositif de rangement étant d'une manière générale caractérisé en ce que le réceptacle est un bac.

Par bac, on entend ici un réceptacle à fond plein et étanche, à la manière d'une cuvette.

Ainsi protégée des éventuelles projections par un tel bac, la roue de secours reste avantageusement propre.

Elle se trouve en outre conjointement protégée d'éventuels chocs, et elle reste avantageusement dissimulée à la vue.

Préférentiellement, le bac constituant le réceptacle suivant l'invention est amovible.

La préhension de la roue de secours s'en trouve facilitée.

Suivant un développement de cette disposition, le bac mis en oeuvre suivant l'invention présente au moins une poignée, et il est équipé d'un couvercle, qui, pour le transport de la roue de secours, et/ou celui de la roue à réparer à laquelle celle-ci à été substituée, peut avantageusement être utilisé à la manière d'une valise.

Conjointement, le support associé peut par exemple comporter deux longrines, sur lesquelles le réceptacle est apte à être librement posé, et qui, préférentiellement, sont chacune formées d'une glissière télescopique, deux pieds-droits, qui, destinés à être solidarisés au véhicule à équiper, portent chacun respectivement ces longrines et sont aptes à les faire passer d'une position haute à une position basse, et des moyens de commande qui, à la disposition de l'usager, sont propres au contrôle de ces pieds-droits.

En variante, ce support peut comporter un panier, qui est apte à recevoir le réceptacle, deux pieds-droits auxquels est suspendu ce panier, et qui, aptes à le faire passer d'une position haute à une position basse, sont chacun respectivement suspendus à deux chariots montés mobiles sur des rails destinés à être solidarisés au véhicule à équiper, et des moyens de commande, qui, à la disposition de l'usager, sont aptes au contrôle de ces pieds-droits.

Quoi qu'il en soit, pour l'accès à la roue de secours, le support suivant l'invention associe ainsi très simplement à un premier mouvement vertical de descente, assuré par ses pieds-droits, un mouvement horizontal de dégagement, qui, autorisé par ses longrines ou ses chariots, conduit le réceptable qu'il porte à s'étendre largement à l'extérieur du contour hors tout du véhicule.

L'accès à ce réceptacle, et donc à la roue de secours, s'en trouve avantageusement facilité.

En outre, de réalisation simple, sous diverses modalités envisageables, et de faible encombrement, ce support peut avantageusement être non seulement prévu de série sur des véhicules, mais encore être rapporté, à la demande, si désiré, sur pratiquement n'importe quel type de véhicule déjà préexistant.

Les caractéristiques et avantages de l'invention ressortiront d'ailleurs de la description qui va suivre, à titre d'exemple, en référence aux dessins schématiques annexés sur lesquels :

la figure 1 est, avec un arrachement local, une vue en élévation d'un véhicule équipé d'un dispositif de rangement suivant l'invention ;

la figure 2 est, à échelle supérieure, et avec un arrachement local, une vue en perspective de ce dispositif de rangement, représenté isolément, avec la roue de secours dont il a à charge d'assurer le logement ;

la figure 3 est, avec un arrachement local, une vue partielle en élévation de ce dispositif de rangement, suivant, la flèche III de la figure 2 ;

la figure 4 est, à l'échelle de la figure 2, une vue en perspective éclatée du support et du réceptacle que comporte le dispositif de rangement suivant l'invention ;

la figure 5 est une vue en élévation, suivant la flèche V de la figure 4, d'une des longrines que comporte ce support, représentée en configuration rétractée ;

la figure 6 en est une vue en élévation analogue à celle de la figure 5, en configuration déployée ;

les figures 7, 8 et 9 en sont, à échelle supérieure, des vues en coupe transversale, suivant, chacune respectivement, les lignes VII-VII, VIII-VIII et IX-IX de la figure 6 ;

la figure 10 est, à échelle supérieure, et avec des arrachements locaux, une vue en perspective de cette longrine, en configuration déployée ;

les figures 11A, 11B, 11C sont des vues en perspective qui, reprenant chacune pour partie celle de la figure 11, illustrent chacune respectivement diverses phases de mise en oeuvre du dispositif de rangement suivant l'invention ;

les figures 12, 13 sont des vues en perspective qui, analogues à celle de la figure 2, se rapportent chacune respectivement à deux variantes de réalisation ;

la figure 14 est une vue partielle en élévation qui, analogue à celle de la figure 3, se rapporte à une autre variante de réalisation ;

la figure 15 est, avec un arrachement local, une vue en perspective d'une variante de réalisation du réceptacle que comporte le dispositif de rangement suivant l'invention ;

la figure 16 est une vue en coupe transversale de ce réceptacle, suivant la ligne XVI-XVI de la figure 15 ;

La figure 17 est, avec un arrachement local, une vue en élévation d'une autre forme de réalisation du dispositif de rangement suivant l'invention, pour la position de route de celui-ci ;

les figures 18 et 19 en sont, à échelle supérieure, des vues partielles en coupe transversale, suivant chacune respectivement les lignes XVIII-XVIII et XIX-XIX de la figure 17 ;

les figures 20A, 20B sont des vues en élévation, qui, analogues à celle de la figure 17, illustrent le passage du dispositif de rangement suivant l'invention de sa position de route à sa position d'accès.

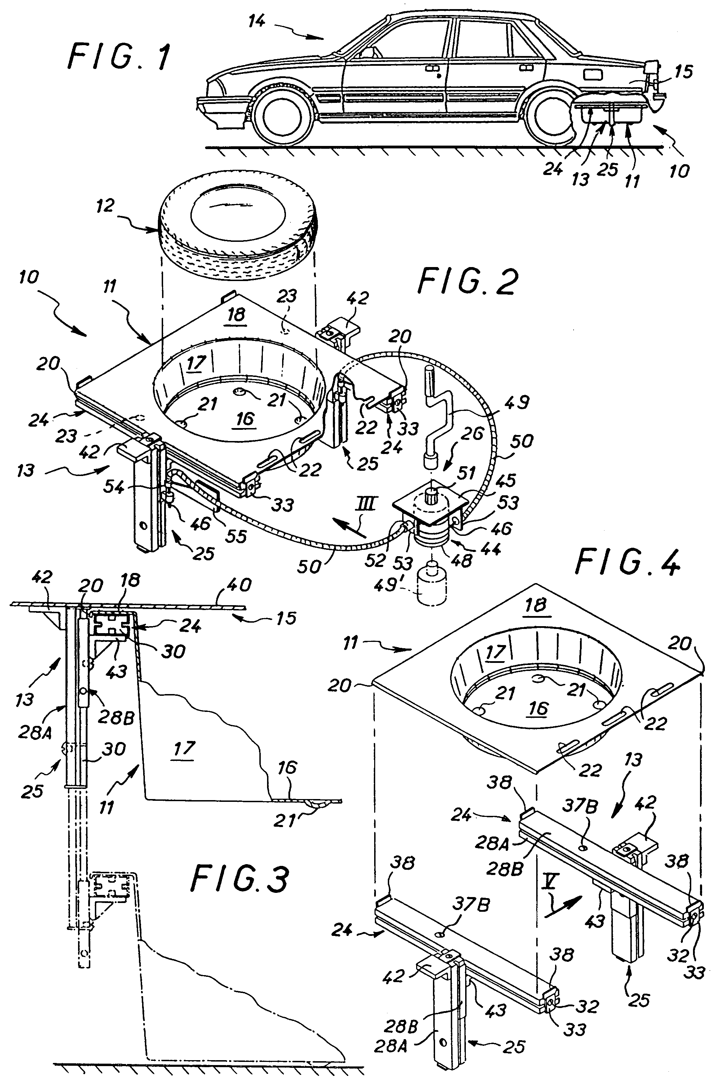

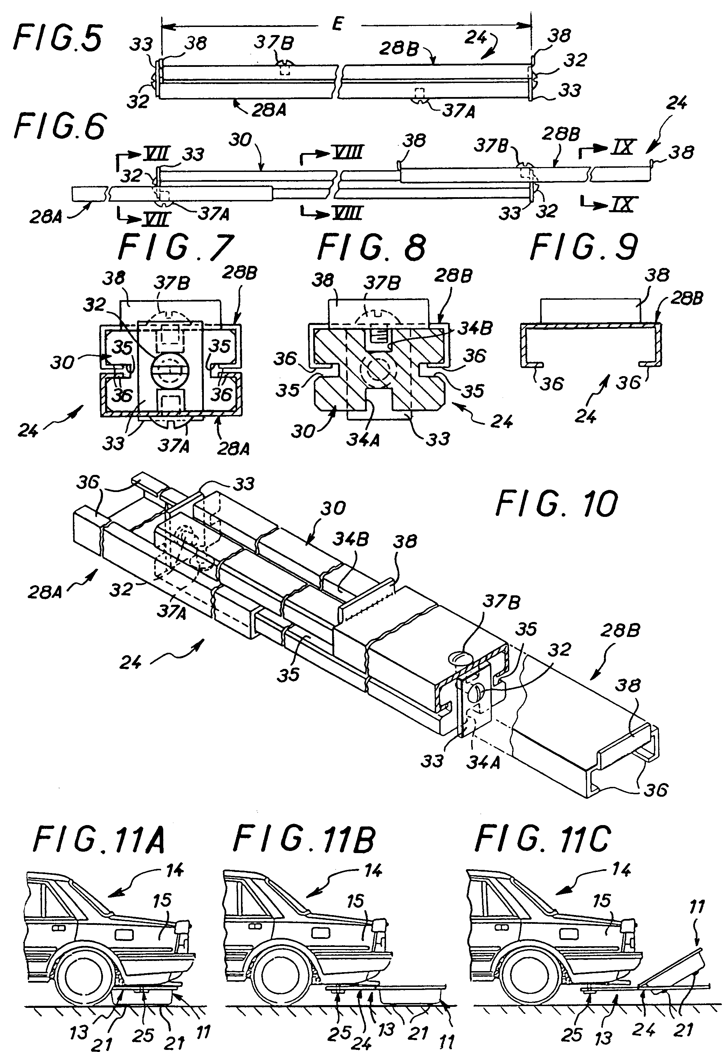

Tel qu'illustré sur ces figures, le dispositif de rangement pour roue de secours 10 suivant l'invention comporte, globalement, un réceptacle 11, qui est propre au logement d'une roue de secours 12, et un support 13, qui, destiné à équiper un véhicule 14, en étant en pratique disposé sous le coffre à bagages 15 de celui-ci, est apte à porter le réceptacle 11 et à faire passer celui-ci de l'une à l'autre de deux positions, l'une de route, figure 1, l'autre d'accès, figure 11B.

Suivant l'invention, le réceptacle 11 est un bac.

Dans la forme de réalisation représentée sur les figures 1 à 16, il comporte, sans lacune d'étanchéité, à la manière d'une cuvette, un fond 16, sensiblement plat, une paroi latérale annulaire 17, légèrement tronconique, et, tout autour du débouché de cette dernière, parallèlement au fond 16, un rebord 18, lui aussi sensiblement plat.

Par ce rebord 18, ce réceptacle 11 est apte à être suspendu, librement, par simple gravité, suivant des modalités décrites plus en détail ultérieurement, au support 13.

Il est donc amovible.

Dans la forme de réalisation représentée, le rebord 18 a, périphériquement, un contour quadrangulaire, et par exemple carré.

Le long de chacun de deux bords opposés, il présente, en saillie sur sa surface inférieure, un retour en équerre 20.

Le réceptacle 11 ainsi constitué peut par exemple être réalisé en matière synthétique.

Préférentiellement, et tel que représenté, il présente, en saillie sur la face externe de son fond 16, des moyens d'appui 21 par lesquels il est apte à porter sur le sol.

Dans la forme de réalisation représentée, il s'agit de simples bossages, qui, disposés en carré, affectent l'épaisseur même du fond 16.

En variante, il pourrait par exemple s'agir aussi bien de roulettes rapportées sur ce fond 16.

Préférentiellement, et tel que représenté, le réceptacle 11 présente en outre au moins une poignée 22.

Dans la forme de réalisation représentée, trois poignées 22 sont prévues le long d'un des bords du rebord 18 intermédiaire entre ceux présentant un retour en équerre 20, et il s'agit de simples évidements, allongés en boutonnière, de ce rebord 18.

Les deux poignées extrêmes 22 sont destinées à faciliter l'exercice d'une traction sur le réceptacle 11.

La poignée intermédiaire 22 est destinée à en permettre la préhension.

Enfin, le rebord 18, peut comporter, localement, pour des raisons qui apparaîtront ci-après, au voisinage de chacun de ses bords munis d'un retour en équerre 20, tel que schématisé en pointillés sur la figure 2, un ajour 23.

Globalement, dans les formes de réalisation représentées sur les figures 1 à 16, le support 13 comporte deux longrines 24, qui, parallèles l'une à l'autre, s'étendent horizontalement, parallèlement aux roues du véhicule 14 concerné, et sur lesquelles le réceptacle 11 est destiné à être posé par son rebord 18, deux pieds-droits 25, qui, destinés à être solidarisés à ce véhicule 14, portent chacun respectivement les longrines 24, et qui, s'étendant verticalement, perpendiculairement aux longrines 24, sont aptes à les faire passer, verticalement, d'une position haute, représentée en traits continus à la figure 3, pour l'une d'elles, à une position basse, représentée en traits interrompus sur cette figure 3, et réciproquement, et des moyens de commande 26, qui, à la disposition de l'usager, sont propres, suivant des modalités très diverses détaillées ultérieurement, au contrôle de ces pieds-droits 25.

Dans les formes de réalisation représentées, et ainsi qu'il est mieux visible pour l'une d'elles sur les figures 5 à 10, chacune des longrines 24 est formée d'une glissière télescopique dont un premier élément 28A, ou élément fixe, est assujetti au pied-droit 25 correspondant, et dont un autre élément 28B, ou élément mobile, est adapté à recevoir le réceptacle 11.

En pratique, dans ces formes de réalisation, cette glissière télescopique comporte, en outre, un élément intermédiaire 30, qui est porté à coulissement par l'élément fixe 28A, et qui porte à coulissement l'élément mobile 28B, avec, tel que décrit plus en détail ultérieurement, des moyens de butée de l'un à l'autre de ces divers éléments 28A, 28B et 30.

L'élément intermédiaire 30 est constitué par un barreau massif, rectiligne, et de section globalement rectangulaire, à chacune des extrémités duquel il est rapporté, transversalement, à l'aide d'une vis 32, une plaquette d'arrêt 33.

A l'une de ses extrémités, la plaquette d'arrêt 33 dépasse de sa face inférieure, pour sa butée, et donc sa retenue, contre l'élément fixe 28A, et, à l'autre de ses extrémités, la plaquette d'arrêt 33 dépasse de sa face supérieure, pour la butée, et donc la retenue, de l'élément mobile 28B.

L'élément intermédiaire 30 présente, en outre, longitudinalement, sur toute sa longueur, sur sa face inférieure, une rainure 34A, sur sa face supérieure, une rainure 34B, et, sur chacun de ses flancs latéraux, une gorge 35.

L'élément fixe 28A se présente sous la forme générale d'un profilé, à section en U, dont les ailes latérales présentent en direction l'une de l'autre des retours en équerre 36 par lesquels il est crocheté, à coulissement, sur l'élément intermédiaire 30, à la faveur des gorges 35 de celui-ci.

L'élément fixe 28A porte en outre une vis 37A dont le fût est en prise avec la rainure 34A de l'élément intermédiaire 30, et qui est ainsi apte à en limiter le coulissement sur celui-ci, par coopération en butée avec la plaquette d'arrêt 33 correspondante.

L'élément mobile 28B a une constitution sensiblement analogue.

Il présente donc des retours en équerre 36 par lesquels il est crocheté, à coulissement, sur l'élément intermédiaire 30, à la faveur des gorges 35 de celui-ci, et il porte une vis 37B, dont le fût est en prise avec la rainure 34B de cet élément intermédiaire 30, et qui est ainsi à même d'en limiter le coulissement sur celui-ci, par coopération en butée avec la plaquette d'arrêt 33 correspondante.

Mais, à la différence de l'élément fixe 28A, cet élément mobile 28B présente, transversalement, en saillie sur sa surface supérieure, et parallèlement l'une à l'autre, deux plaquettes de retenue 38, dont l'écartement E correspond à la longueur correspondante du rebord 18 du réceptacle 11, et qui sont ainsi aptes à retenir longitudinalement ce réceptacle 11 lorsque celui-ci est posé sur les longrines 24 ainsi constituées.

Dans la forme de réalisation représentée, ces plaquettes de retenue 38 interviennent aux extrémités de l'élément mobile 28B, et elles sont d'un seul tenant avec lui, par retour en équerre de sa partie médiane.

Il résulte de ce qui précède que chacune des longrines 24 est susceptible de passer d'une configuration rétractée, figures 4 et 5, pour laquelle, les éléments 28A, 28B et 30 qui la constituent étant superposés les uns au-dessus des autres, sa longueur est minimale, à une configuration déployée, figure 6, pour laquelle ces éléments 28A, 28B et 30 étant au contraire successivement décalés longitudinalement les uns par rapport aux autres, avec l'élément intermédiaire 30 en butée, par l'une de ses plaquettes d'arrêt 33, contre la vis 37A de l'élément fixe 28A tandis que l'élément mobile 28B est en butée par sa vis 37B contre l'autre plaquette d'arrêt 33 de l'élément intermédiaire 30, sa longueur est maximale.

En pratique, de l'une à l'autre de ces configurations, la longueur d'une longrine 24 se trouve multipliée par un facteur supérieur à deux.

Ainsi qu'on le comprendra, c'est pour pouvoir s'engager sur les vis 37B que comportent les éléments mobiles 28B des longrines 27 que le rebord 18 du réceptacle 11 peut comporter les ajours 23 prévus en pointillés sur la figure 2.

Dans la forme de réalisation plus particulièrement représentée sur les figures 1 à 10, chacun des pieds-droits 25 est formé d'une glissière télescopique, à élément fixe 28A, élément mobile 28B et élément intermédiaire 30, de même type, à la différence, cependant, que l'élément mobile 28B n'y présente pas de plaquette de retenue 38.

L'élément fixe 28A de cette glissière télescopique est destiné à être solidarisé au véhicule 14 à équiper, et, plus précisément, ainsi qu'il est visible à la figure 3, à la tôle de fond 40 de son coffre à bagages 15, à la surface inférieure de celle-ci.

Cet élément fixe 28A porte, à cet effet, à son dos, une équerre 42.

Conjointement, l'élément mobile 28B, qui a en pratique une longueur inférieure à celle de l'élément fixe 28A, est solidaire de la longrine 24 correspondante, et, plus précisément, de l'élément fixe 28A de celle-ci.

Il porte à cet effet, à son dos, entre ses extrémités, une équerre 43.

Conjointement, les moyens de commande 26 comportent un enrouleur 44, dont le boîtier est destiné à être solidarisé, par une plaque de fixation 45, au véhicule 14 à équiper, et, plus précisément, à la tôle de fond 40 de son coffre à bagages 15, deux câbles 46, qui, attelés, à l'une de leurs extrémités, au tambour 48 de cet enrouleur 44, sont attelés, chacun respectivement, à l'autre de leurs extrémités, aux pieds-droits 25, et, plus précisément, à l'élément mobile 28B de ceux-ci, et un organe de commande, tel que manivelle 49 ou moteur électrique 49' par exemple, propre à l'entraînement en rotation de ce tambour 48.

En pratique, chacun des câbles 46 est engagé dans une gaine 50, qui est contrebutée, à une extrémité, par un arrêt de gaine 52 solidaire d'une plaquette 53 portée par la plaque de fixation 45, et, à l'autre extrémité, par un arrêt de gaine 54 solidaire d'une plaquette 55 destinée à être fixée au véhicule 14.

Par exemple, l'embout d'entraînement 51 du tambour 48 de l'enrouleur 44 fait saillie dans le coffre à bagages 15.

En position de route, figure 1, les longrines 24 sont en configuration rétractée et les éléments mobiles 28B des pieds-droits 25, dûment retenus par les câbles 46, sont en position haute.

Le réceptacle 11 est alors au ras de la tôle de fond 40 du coffre à bagages 15, sans pouvoir échapper aux longrines 24.

Pour un changement de roue, il suffit, dans un premier temps, d'actionner l'enrouleur 44, à l'aide par exemple de la manivelle 49.

Par leur élément mobile 28B, qui, par les câbles 46, reste sous le contrôle de l'enrouleur 44, les pieds-droits 25 viennent alors déposer sur le sol le réceptacle 11, tel que représenté à la figure 11A.

Au cours du mouvement de descente correspondant, les glissières télescopiques constituant les pieds-droits 25 assurent avantageusement le guidage du réceptacle 11.

Il suffit, ensuite, de faire passer les longrines 24 de leur configuration rétractée précédente à leur configuration déployée, figure 11B, en tirant par exemple pour ce faire sur le réceptacle 11 à la faveur des poignées 22 extrêmes prévues à cet effet sur celui-ci.

Il suffit, enfin, soit d'extraire directement de ce réceptacle 11 la roue de secours 12, soit de dégager au préalable des longrines 24 du support 13 ce réceptacle 11, tel que représenté à la figure 11C.

Si, comme représenté, le réceptacle 11 est basculé, il peut en être plus aisé d'en faire sortir la roue de secours 12.

Pour la remise en place de cette roue de secours 12, il convient, suivant un processus inverse du précédent, de la disposer à nouveau dans le réceptacle 11, de pousser celui-ci sous le coffre à bagages 15 du véhicule 10, puis, à l'aide de la manivelle 49, de ramener en position de route ce réceptacle 11.

Ces opérations sont simplifiées si, au lieu d'être une manivelle 49, l'organe de commande correspondant est un moteur électrique 49'.

Il suffit, en effet, à chaque fois, d'assurer, par simple appui sur un bouton, l'entrée en action de ce moteur électrique 49', sans intervention à l'intérieur du coffre à bagages 15.

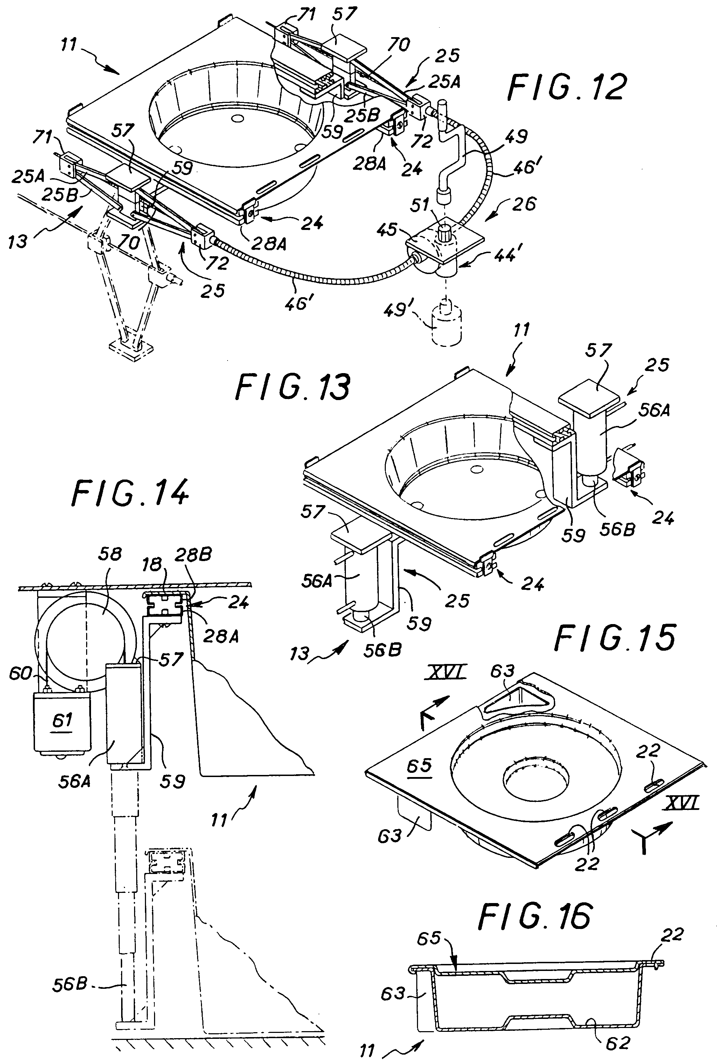

Dans la variante de réalisation représentée sur la figure 12, chacun des pieds-droits 25 est formé d'un parallélogramme déformable, à la manière d'un cric mécanique.

De manière connue en soi, un tel parallélogramme déformable comporte, d'une part, deux parties 25A, 25B, l'une supérieure, l'autre inférieure, qui, formées chacune de deux leviers articulés l'un à l'autre, sont chacune articulées, par l'un de ses leviers, à un écrou 71, et par l'autre, à une pièce de liaison 72, par exemple une chape, et, d'autre part, une vis 70 qui, traversant librement la pièce de liaison 72, est en prise à vissage avec l'écrou 71.

Les moyens de commande 26 correspondants comportent, par exemple, tel que représenté, un réducteur 44', du type à vis tangente et roue à deux sorties par exemple, qui, solidarisé par une plaquette de fixation 45 au véhicule 14 à équiper, est propre, par l'intermédiaire de transmisssions à flexible 46' dont la gaine 50 est en butée contre la pièce de liaison 72 correspondante, à l'entraînement conjoint des deux vis 70 des parallélogrammes déformables formant les pieds-droits 25, et, comme précédemment, un organe de commande, tel que manivelle 49 ou moteur électrique 49' par exemple, qui est propre, par un embout 51, à l'entraînement en rotation du réducteur 44'.

Pour le reste, les dispositions sont du même type que les précédentes.

En variante, il peut être mis en oeuvre des moyens de commande 26 à câbles 46 du type des précédents.

Quoi qu'il en soit, et ainsi qu'on le notera, cette variante de réalisation ne nécessite pas la mise en oeuvre de glissières télescopiques pour le guidage des longrines 24 lors de leur déplacement vertical.

Quoi qu'il en soit, également, l'une des parties de chacun des parallélogrammes déformables mis en oeuvre, ou partie mobile, en pratique la partie inférieure 25B dans cette forme de réalisation, est simplement solidaire de la longrine 24 correspondante, et, plus précisément, de l'élément fixe 28A de celle-ci, par exemple par l'intermédiaire d'une potence 59, tandis que l'autre, ou partie fixe, en pratique la partie supérieure 25A dans cette forme de réalisation, est destinée à être solidarisée, par exemple par une plaquette de fixation 57, au véhicule 14.

Suivant les variantes de réalisation représentées sur les figures 13 et 14, chacun des pieds-droits 25 est formé d'un vérin dont un élément 56A, ou élément fixe, est destiné à être solidarisé au véhicule 14 à équiper, par une plaquette de fixation 57, et dont un autre élément 56B, ou élément mobile, est solidaire, par une potence 59, de la longrine 24 correspondante, et, plus précisément, de l'élément fixe 28A de celle-ci.

Par exemple, figure 13, les vérins ainsi mis en oeuvre sont des vérins hydrauliques, et les moyens de commande 26 correspondants, non représentés sur les figures, comportent une source de puissance hydraulique.

Bien entendu, il peut s'agir d'une source de puissance hydraulique qui est déjà préexistante sur le véhicule 14 pour assumer d'autres fonctions, et dont il est ainsi tiré un parti supplémentaire.

En variante, figure 14, les vérins mis en oeuvre sont des vérins télescopiques, et, à la manière de ceux usuellement mis en oeuvre pour la commande d'une antenne télescopique, les moyens de commande 26 correspondants comportent un câble 60, qui, attelé à l'élément mobile 56B d'un tel vérin, à l'une de ses extrémités, est soumis, à l'autre de celles-ci, à l'arbre de sortie d'un moteur électrique 61, après passage sur une poulie de renvoi 58.

Les dispositions correspondantes relevant de l'homme de métier, elles ne seront pas décrites plus en détail ici.

Pour le reste, les dispositions sont, comme précédemment, du même type que celles décrites en référence aux figures 1 à 10.

Dans la variante de réalisation représentée sur les figures 15 et 16, le réceptacle 11 suivant l'invention comporte, outre un alvéole central 62 propre au rangement de la roue de secours 12, comme décrit précédemment, au moins un autre alvéole 63, qui, disposé périphériquement, est propre à un quelconque autre logement, par exemple à celui de gants, d'outils ou d'un bidon d'huile.

Dans la forme de réalisation représentée, deux alvéoles 63 supplémentaires ont ainsi été prévus.

Par ailleurs, dans cette variante de réalisation, le réceptacle 11 est équipé d'un couvercle 65.

Il peut ainsi avantageusement être manipulé à la manière d'une valise, ce qui permet de porter la roue à réparer chez un réparateur sans avoir à nouveau à la manipuler.

Par exemple, le couvercle 65 est articulé par une charnière au réceptacle 11 le long d'un de ses bords, et il s'encliquette élastiquement à ce réceptacle 11 le long du bord opposé au précédent.

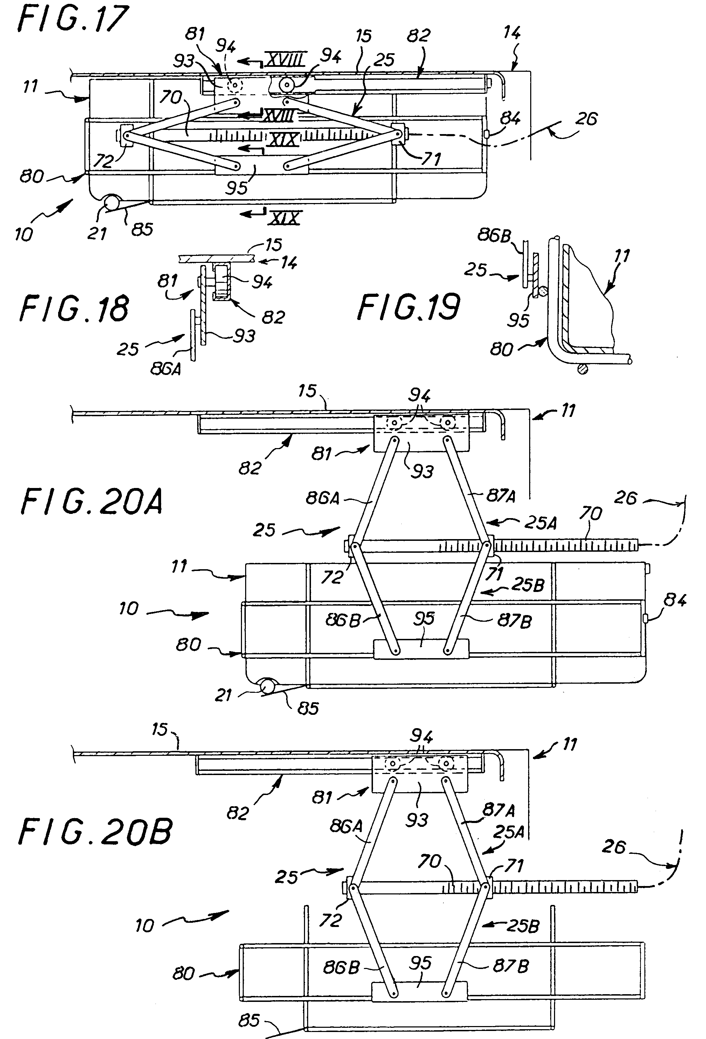

Suivant la variante de réalisation illustrée par les figures 17 à 20, le dispositif de rangement 10 suivant l'invention comporte un panier 80, qui est apte à recevoir le réceptacle 11, deux pieds-droits 25, auxquels est suspendu le panier 80, et qui, aptes à le faire passer de l'une à l'autre de deux positions, l'une haute, l'autre basse, sont chacun respectivement suspendus à deux chariots 81 montés mobiles sur des rails 82 destinés à être solidarisés au véhicule 14 à équiper, sous le coffre à bagages 15 de celui-ci.

Comme précédemment, le réceptacle 11 est un bac, et ce bac est amovible.

Dans la forme de réalisation représentée, les moyens d'appui 21 que ce réceptacle 11 comporte à l'arrière, en saillie sur la face externe de son fond, sont constitués par des roulettes.

Le panier 80, quant à lui, est, par exemple, et tel que représenté, en fils soudés.

Préférentiellement, il est ouvert à l'avant, et, tel que schématisé sur les figures, il est équipé, pour sa fermeture, d'une sangle 84 propre à retenir le réceptacle 11 quand celui-ci y est présent.

Le réceptacle 11 peut ainsi très simplement en être extrait par l'avant.

Pour faciliter cette extraction, le panier 80 est équipé, sur son fond, d'une surface de roulement, qui, du côté avant, forme une rampe 85.

Comme précédemment, chacun des pieds-droits 25, dont un seul est visible sur les figures, est constitué, à la manière d'un cric mécanique, d'un parallélogramme déformable.

Chacun de ces pieds-droits 25 comporte donc deux parties, dont une, 25A, mobile, en pratique la partie supérieure dans cette forme de réalisation, est attelée au chariot 81 correspondant, tandis que l'autre, 25B, fixe, en pratique la partie inférieure dans cette forme de réalisation, est attelée au panier 80.

Chacune de ces parties 25A, 25B est elle-même formée de deux leviers 86A-87A, 86B-87B, avec, commune à l'ensemble, une vis 70, qui, attelée librement à rotation à une pièce de liaison 72 sur laquelle est articulé un premier levier 86A, 86B de chacune des parties 25A, 25B, est en prise à vissage avec un écrou 71 sur lequel est articulé un deuxième levier 87A, 87B de chacune de celles-ci, et qui, tel que schématisé en traits interrompus, est susceptible d'être soumise aux moyens de commande 26 associés.

Non détaillés sur les figures 17 à 20, ces moyens de commande 26 sont du même type que ceux précédemment décrits.

Dans la forme de réalisation représentée, chaque chariot 81 est constitué d'une plaque 93, qui s'étend sensiblement verticalement, et à laquelle sont articulés les leviers 86A-87A de la première partie 25A du pied-droit 25 correspondant, et de deux galets 94, qui, montés rotatifs autour d'axes horizontaux sur la plaque 93, à distance l'un de l'autre, roulent sur le rail 82 associé.

En pratique celui-ci est constitué par un profilé à section transversale en U dont les ailes présentent chacune respectivement des retours en équerre en direction l'une de l'autre.

Des butées sont prévues aux extrémités.

Les rails 82 ainsi constitués sont destinés à être fixés au véhicule 14 à équiper par la surface externe d'une de leurs ailes, cependant que les galets 94 des chariots 81 roulent sur la surface interne de l'autre de celles-ci.

Enfin, les leviers 86B-87B de la deuxième partie 25B de chacun des pieds-droits 25 sont eux-mêmes articulés à une plaque 95, qui s'étend à la verticale à l'aplomb de la plaque 93 précédente, et dont est solidaire, par exemple par soudage, le panier 80.

En pratique, les leviers 86A-87A sont articulés à la plaque 93 à distance l'un de l'autre, et, de même, les leviers 86B-87B sont articulés à la plaque 95 à distance l'un de l'autre.

Il en résulte que, dans ce qui précède, l'expression "parallélogramme déformable" doit être entendue dans un sens large, tout se passant, du point de vue fonctionnel, comme si les leviers 86A-87A et 86B-87B constituaient effectivement entre eux un réel parallélogramme.

En position de route, figure 17, le panier 80, qui contient le réceptacle 11, est en position haute, l'écrou 71 et la pièce de liaison 72 des pieds-droits 25 étant écartés l'un de l'autre, et l'ensemble est en butée vers l'avant des rails 82.

Pour passer en position d'accès il faut tout d'abord intervenir sur les moyens de commande 26 associés.

Comme décrit précédemment, il s'agit par exemple d'un moteur électrique commandant en conséquence la vis 70 des pieds-droits 25.

Il suffit, dans ce cas, d'agir sur un bouton propre à la mise en route de ce moteur.

Lorsque la course de descente souhaitée est atteinte, sous le contrôle par exemple d'un micro-interrupteur, l'écrou 71 et la pièce de liaison 72 des pieds-droits 25 sont rapprochés l'un de l'autre, et le panier 80 est en position basse.

Il suffit dès lors de tirer le réceptacle 11 par sa poignée de manière à faire rouler les chariots 81 sur les rails 82 jusqu'à l'arrière de ceux-ci, figure 20A.

Pour la position d'accès ainsi atteinte, une partie, au moins, du réceptacle 11 se trouve hors de l'emprise du véhicule.

Il suffit, dès lors, après avoir retiré la sangle 84, figure 20B, de continuer à tirer sur le réceptacle 11.

A la faveur en effet de la rampe 85 et de la surface de roulement qui lui fait suite, celui-ci se dégage alors progressivement du panier 80, jusqu'à s'en retirer complètement.

Après que la sangle 84 y a été raccrochée, le panier 80 peut être ramené en position de route.

Dans cette forme de réalisation, le dispositif de rangement suivant l'invention présente l'avantage d'une fixation simplifiée sous le coffre 15 du véhicule 14 à équiper, par fixation directe de ses rails 82 sous ce coffre 15, d'un encombrement réduit, d'une mise en oeuvre plus aisée, par roulement plutôt que par glissement, et d'une meilleure protection à l'égard des projections, les rails 82, qui assurent le déplacement horizontal vers l'arrière en remplacement des longrines 24 précédentes, étant disposés, eux, en partie haute, et donc dans un endroit plus abrité.

Bien entendu la présente invention ne se limite pas aux formes de réalisation décrites et représentées, mais englobe toute variante d'exécution et/ou de combinaison de leurs divers éléments.

En particulier, au lieu d'être constituées par des évidements, la ou les poignées du réceptacle suivant l'invention peuvent aussi bien être constituées par de simples renflements locaux de son rebord.

En outre, le contour de ce rebord peut éventuellement être plus ou moins tronqué, par exemple par des chanfreins ou des arrondis, dans ses angles.

Enfin, le véhicule à équiper n'est pas nécessairement un véhicule automobile.

Il pourrait en effet aussi bien s'agir par exemple d'un véhicule tracté, tel que caravane, remorque ou autre.

## Revendications

1. Dispositif de rangement pour roue de secours, du genre comportant un réceptacle (11), propre au logement d'une roue de secours (12), et un support (13), qui, destiné à équiper un véhicule (14), est apte à porter ledit réceptacle (11) et à faire passer celui-ci de l'une à l'autre de deux positions, l'une de route, l'autre d'accès, caractérisé en ce que ledit réceptacle est un bac.

2. Dispositif de rangement suivant la revendication 1, caractérisé en ce que le support (13) comporte deux longrines (24), sur lesquelles le réceptacle (11) est apte à être posé, deux pieds-droits (25), qui, destinés à être solidarisés au véhicule (14) à équiper, portent chacun respectivement lesdites longrines (24) et sont aptes à les faire passer d'une position haute à une position basse, et des moyens de commande (26), qui, à la disposition de l'usager, sont propres au contrôle desdits pieds-droits (25).

3. Dispositif de rangement suivant la revendication 2, caractérisé en ce que chacun des pieds-droits (25) est formé d'une glissière télescopique, dont un élément (28A), fixe, est destiné à être solidarisé au véhicule (14) à équiper, et dont un autre élément (28B), mobile, est solidaire de la longrine (24) correspondante.

4. Dispositif de rangement suivant l'une quelconque des revendications 2, 3, caractérisé en ce que chacune des longrines (24) est formée d'une glissière télescopique dont un élément (28A), fixe, est assujetti au pied-droit (25) correspondant, et dont un autre élément (28B), mobile, est adapté à recevoir le réceptacle (11).

5. Dispositif de rangement suivant l'une quelconque des revendications 3, 4, caractérisé en ce que, outre son élément fixe (28A) et son élément mobile (28B), une glissière télescopique comporte un élément intermédiaire (30), qui est porté à coulissement par l'élément fixe (28A), et qui porte à coulissement l'élément mobile (28B), avec des moyens de butée de l'un à l'autre de ces divers éléments.

6. Dispositif de rangement suivant l'une quelconque des revendications 3 à 5, caractérisé en ce que les moyens de commande (26) comportent un enrouleur (44), dont le boîtier est destiné à être solidarisé au véhicule (14) à équiper, deux câbles (46), qui, attelés, à l'une de leurs extrémités, au tambour (48) dudit enrouleur (44), sont attelés chacun respectivement aux pieds-droits (25) à l'autre de leurs extrémités, et un organe de commande, tel que manivelle (49) ou moteur (49') par exemple, propre à l'entraînement en rotation dudit tambour (48).

7. Dispositif de rangement suivant la revendication 2, caractérisé en ce que chacun des pieds-droits (25) est formé d'un parallélogramme déformable à la manière d'un cric mécanique, dont une des parties (25B) est solidaire de la longrine (24) correspondante, tandis que l'autre (25A) est destinée à être solidarisée au véhicule (14) à équiper.

8. Dispositif de rangement suivant la revendication 1, caractérisé en ce que le support (13) comporte un panier (80), qui est apte à recevoir le réceptacle (11), deux pieds-droits (25), auxquels est suspendu le panier (80), et qui, aptes à le faire passer d'une position haute à une position basse, sont chacun respectivement suspendus à deux chariots (81) montés mobiles sur des rails (82) destinés à être solidarisés au véhicule (14) à équiper, et des moyens de commande (26), qui, à la disposition de l'usager, sont aptes au contrôle desdits pieds-droits (25).

9. Dispositif de rangement suivant la revendication 8, caractérisé en ce que le panier (80) est ouvert vers l'avant, et, pour sa fermeture, il est ésuipé d'une sangle (84).

10. Dispositif de rangement suivant l'une quelconque des revendications 8, 9, caractérisé en ce que le panier (80) étant en fils soudés, il est équipé sur son fond d'une surface de roulement, qui, du côté avant, forme une rampe (85).

11. Dispositif de rangement suivant l'une quelconque des revendications 8 à 10, caractérisé en ce que chacun des pieds-droits (25) est formé d'un parallélogramme déformable, à la manière d'un cric mécanique, dont une des parties (25A) est attelée au chariot (81) correspondant tandis que l'autre (25B) est attelée au panier (80).

12. Dispositif de rangement suivant l'une quelconque des revendications 7 à 11, caractérisé en ce que les moyens de commande (26) comportent un réducteur (44') qui est propre, par l'intermédiaire de transmissions à flexible (46'), à l'entraînement conjoint de deux vis (70) des parallélogrammes déformables formant les pieds-droits (25), et un organe de commande, tel que manivelle (49) ou moteur (49') par exemple, propre à l'entraînement en rotation dudit réducteur (44').

13. Dispositif de rangement suivant la revendication 2, caractérisé en ce que chacun des pieds-droits (25) est formé d'un vérin, dont un élément (56A), fixe, est destiné à être solidarisé au véhicule (14) à équiper, et dont un autre élément (56B), mobile, est solidaire de la longrine (24) correspondante.

14. Dispositif de rangement suivant la revendication 13, caractérisé en ce que ledit vérin est un vérin hydraulique, et les moyens de commande (26) correspondants comportent une source de puissance hydraulique.

15. Dispositif de rangement suivant la revendication 13, caractérisé en ce que ledit vérin est un vérin télescopique, et les moyens de commande (26) correspondants comportent un câble (60), qui, attelé à l'élément mobile (56B) de ce vérin à l'une de ses extrémités, est soumis à l'arbre de sortie d'un moteur électrique (61) à l'autre de celles-ci.

16. Dispositif de rangement suivant l'une quelconque des revendications 1 à 7, caractérisé en ce que le réceptacle (11) comporte latéralement un rebord (18) par lequel il est apte à être suspendu au support (13).

17. Dispositif de rangement suivant l'une quelconque des revendications 1 à 16, caractérisé en ce que le réceptacle (11) présente, en saillie sur la face externe de son fond (16), des moyens d'appui (21), tels que roulettes ou simple bossage, par lesquels il est apte à porter sur le sol.

18. Dispositif de rangement suivant l'une quelconque des revendications 1 à 17, caractérisé en ce que le réceptacle (11) présente au moins une poignée (22).

19. Dispositif de rangement suivant l'une quelconque des revendications 1 à 18, caractérisé en ce que, outre un alvéole (62) propre au rangement de la roue de secours (12), le réceptacle (11) comporte au moins un autre alvéole (63).

20. Dispositif de rangement suivant l'une quelconque des revendications 1 à 19, caractérisé en ce que le réceptacle (11) est équipé d'un couvercle (65).

21. Dispositif de rangement suivant l'une quelconque des revendications 1 à 20, caractérisé en ce que le réceptacle (11) est amovible.

FIG.1

FIG.2

FIG.4

FIG.3

FIG.5

FIG.6

FIG.7

FIG.8

FIG.9

FIG. 10

FIG.11A

FIG.11B

FIG.11C

FIG.12

FIG.13

FIG.14

FIG.15

FIG.16

FIG.17

FIG.18

FIG.19

FIG.20A

FIG.20B

**EP 0 477 095 A1**

Office européen
des brevets

**RAPPORT DE RECHERCHE EUROPEENNE**

Numero de la demande

EP 91 40 2482

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 054 429 (DAIMLER-BENZ) * revendications; figures * --- | 1,2,13, 14 | B 62 D 43/04 B 62 D 43/00 B 62 D 43/10 |
| A | US-A-4 072 258 (CRUSON) * revendications; figures * --- | 1,7,12 | |
| D,A | US-A-4 095 709 (ELLER) * en entier * --- | 1,2 | |
| A | PATENT ABSTRACTS OF JAPAN Vol. 6, no. 045 (M-118)(923) 20 mars 1982 & JP-A-56 160 233 ( TOYOTA ) * résumé * --- | 1 | |
| A | US-A-2 010 270 (LAWRENCE) * en entier * ----- | 1 | |

DOMAINES TECHNIQUES RECHERCHES (Int. Cl.5)

B 62 D

Le présent rapport a été établi pour toutes les revendications

| Lieu de la recherche | Date d'achèvement de la recherche | Examinateur |
|---|---|---|
| LA HAYE | 20-12-1991 | PIRIOU J.C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)

15